# EUROPEAN PATENT APPLICATION

(11) **EP 3 942 970 A1**
(43) Date of publication of application: **26.01.2022**
(21) Application number: 20186740.5
(22) Date of filing: 20.07.2020
(51) Int. Cl.: A47G 21/18

(54) **PAPER DRINKING STRAW AND BEVERAGE CONTAINER**

(71) Applicant: Capri Sun AG, 6300 Zug (CH)
(72) Inventor: KORBMANN, Andreas, 69214 Eppelheim (DE); SCHEHL, Beatus, 69214 Eppelheim (DE); SCHWARTZ, Erhard, 69168 Wiesloch (DE)
(74) Representative: Grünecker Patent- und Rechtsanwälte PartG mbB

(57) **Abstract**

The invention refers to a paper drinking straw (17, 23, 29, 35, 49) for a beverage container (48, 55) with a penetration opening (51, 57) for inserting the paper drinking straw, wherein the paper drinking straw comprises a paper tube (1, 9, 18, 24, 30, 36) with a bevelled tip (19, 25, 31, 37, 52) at a first end (2, 10, 21, 27, 33, 39). The bevelled tip is at least partially impregnated with an impregnation agent. Moreover, the invention refers to a beverage container (48, 55) for receiving liquid product, wherein the beverage container comprises a penetration opening (51, 57) for introducing a paper drinking straw (17, 23, 29, 35, 49) and the paper drinking straw.

## Description

The present invention refers to a paper drinking straw according to the preamble of claim 1, and a beverage container according to claim 12.

### Prior art

GB 2579107 A discloses a paper drinking straw with a first and a second paper layer each comprising an inner and an outer surface. A paper core layer comprises a first and a second surface. The inner surface of the first paper layer is bonded to the first surface of the paper core layer, and the inner surface of the second paper layer is bonded to the second surface of the paper core layer. At least the outer surfaces of the first and second paper layer are coated with a water-resistant barrier coating that may comprise a styrene free acrylic based coating, a styrene-based coating, a polymer dispersion coating, modified starch, vegetable oil, or a natural wax. The coating may be applied using a water-based dispersion coating method.

EP 3 581 071 A1 discloses a coated paper straw being rolled into a tube from a sheet. The sheet is a coated paper strip comprising a coated paper with one or two waterproof coating layers. The paper straw has an interface edge that is joined by overlapping portions of two sides of the coated paper strip along the longitudinal direction. The coating layer is at least located on the exterior side of the paper straw, and may be made of a biodegradable coated resin.

US 2019/0343312 A1 discloses a straw with an upper part comprising a hollow plastic tube with a movable, length adaptable section, wherein the plastic may be biodegradable, and with a lower tube shape part made of biodegradable paper. The bottom end of the upper part is coupled to the top end of the lower part. The top end of the lower part may comprise a necked down portion in which the diameter is reduced that may be inserted into the bottom end of the upper part.

It is known that for producing paper drinking straws, several paper layers that may be coated with adhesive are helically or horizontally wound and finally stuck together.

For example, WO 2020/099360 A1 discloses a system and a method for producing lengths of tube, wherein strips are supplied with a strip supplying device to a winding device and are helically wound around a mandrel to form a base tube moving away from the mandrel at a tube speed. A selection of at least one of the strips is placed with a contact side thereof in direct contact with the mandrel during the winding, wherein the at least one strip of the selection is moved along a lubrication device to apply a layer of lubrication material on the contact side of the at least one strip before the at least one strip is wound around the mandrel. The base tube may be cut at a predetermined length with a cutting device while the base tube is moving in a tube direction at the tube speed.

In order to enable the penetration of a paper drinking straw into a penetration opening of a beverage container one end of the paper drinking straw is provided with a slant for forming a bevelled tip. However, the bevelled tip reduces the stability of the paper drinking straw in the area of the tip. Thus, by a light touch or by applying a pressure, the tip may fold over or may kink. Consequently, penetrating the paper drinking straw with the tip into the penetration opening of a beverage container may be hindered or may even be impossible.

### Object

The invention thus has the object to provide a paper drinking straw and a beverage container with the paper drinking straw that enables a secure penetration of a tip of the paper drinking straw in the beverage container.

### Solution

This object is solved by the paper drinking straw of claim 1 and the beverage container of claim 12. Additional embodiments and improvements are disclosed in the dependent claims.

The paper drinking straw for a beverage container with a penetration opening for inserting the paper drinking straw comprises a paper tube with a bevelled tip at a first end. The bevelled tip is at least partially impregnated with an impregnation agent.

The impregnation of at least part of the bevelled tip improves its hardness and stability such that folding over or kinking of the bevelled tip can be prevented and a reliable penetration of the bevelled tip into the beverage container is possible.

Moreover, capillary action at the cutting edge of the bevelled tip can be reduced as penetration of the liquid provided in the beverage container may be prevented or strongly reduced.

The paper may comprise at least one of: wood fibres, bamboo fibres, bagasse fibres, seaweed fibres, fibres of banana plant, fibres of Abaca plant, synthetic fibres, polymer-based fibres, plastic fibres.

For producing the paper drinking straw, first the paper tube may be produced and the bevelled tip may be provided. Only after that, the bevelled tip is at least partly impregnated. Thus, the at least one paper layer, or at least some part of the at least one paper layer for producing the paper tube does not have to be impregnated and/or has to comprise impregnation agent before the paper tube is produced and before the bevelled tip is provided.

At least an inner surface and/or an outer surface of the paper tube and/or a cutting edge of the bevelled tip may be impregnated with the impregnation agent. Alternatively or additionally, the cutting edge of the bevelled tip may be impregnated partially or completely.

The impregnation agent may penetrate into pores and spaces between fibres of the paper. Additionally, the impregnation agent may penetrate at least partially into fibres of the paper.

Regions aside of the bevelled tip may not impregnated with the impregnation agent. Thus, the required amount of impregnation agent may be reduced. An impregnation of the total paper drinking straw may not be required as long as the bevelled tip is at least partially impregnated.

Starting from a second end of the paper tube 70%, 80%, 90%, or 100% of a total length of the paper tube may not be impregnated with the impregnation agent. When 100% of the total length of the paper tube are not impregnated, e.g., the cutting edge of the bevelled tip may be impregnated.

The impregnation agent comprises one or more of silicate, polymer, resin (artificial or natural), wax (artificial or natural), adhesive, latex, also casein glue or shellac.

The impregnation agent may comprise sodium silicate. For example, sodium silicate may be used that comprises an aqueous solution of glasslike and water soluble sodium silicate that has solidified from a melting. Drying of the aqueous solution of sodium silicate starts with evaporation of the water and leads to creation of water-insoluble silica, thus leading to silification. The silification is irreversible.

The sodium silicate may comprise SiO₂3.3/3.5Na₂O, e.g., with 27.5% to 28.5% SiO₂ and 8.1% to 8.5% Na₂O.

The bevelled tip may be at least partially impregnated with an impregnation agent only after providing the bevelled tip.

The paper tube may comprise a winded paper layer, wherein the impregnation agent may only have been applied to an exposed surface of the paper tube. The exposed surface may comprise an outer surface and/or an inner surface and/or a cutting edge of the paper tube.

The paper tube can comprise a paper layer of several layers of paper. The several layers of paper may be glued together. Cutting edges and interspaces may be sealed. Sealing may take place before impregnating the bevelled tip. The width and the thickness, e.g., in grams per square metre, may be different for the several layers.

For all embodiments above and below the impregnation agent can be provided on the paper drinking straw by spraying it onto the paper drinking straw or by dipping the paper drinking straw into a liquid impregnation agent. After dipping it into the impregnation agent, air or any other gas may be used to blow of superfluous impregnation agent. The spraying can be performed by means of a nozzle that ejects the impregnation agent onto the region of the paper drinking straw that is to be impregnated. After application of the impregnation agent by spraying or by dipping the impregnation agent may be caused to solidify by hardening it (e.g. in case of a resin) or by drying it (e.g. in case of a silicate).

Alternatively, the impregnation agent can be applied by bringing the paper drinking straw in contact with a material that is soaked with the impregnation agent such as a sponge or tissue or felt to thereby provide the agent to the paper drinking straw.

Also, the impregnation agent can be applied to a cutting knife such that the agent is transferred to the cutting edge at the same time as the bevelled edge is prepared.

The beverage container for receiving liquid product comprises a penetration opening for introducing a paper drinking straw as described above or below, and the paper drinking straw. The paper drinking straw may be provided in a hygienic packaging. The hygienic packaging may be at least partially attached to the beverage container in a stable manner; it may be stuck to it and/or it may be removable from it. The paper drinking straw can be removed from the hygienic packing, wherein the hygienic packing may be still attached to the beverage container or may have been taken off the beverage container.

The beverage container can be designed as a beverage carton, as a foil bag or as a stand-up pouch.

### Brief description of the figures

The attached figures illustrate exemplified for better understanding and for visualisation aspects and embodiments of the invention.
Figures 1A, 1B illustrate inclined views from below on different states of a paper tube with horizontal winding,
Figure 1C illustrates a side view on the paper tube of Figure 1B,
Figures 2A, 2B illustrate inclined views from below on different states of a paper tube with helically winding,
Figure 2C illustrates a side view on the paper tube of Figure 2B,
Figures 3A, 3B, 3C, 3D illustrate schematically paper drinking straws where different parts are impregnated with an impregnating agent,
Figure 4 illustrates a cross section of a paper drinking straw comprising three paper layers,
Figure 5A illustrates an inclined view from the top on a beverage carton with inserted paper drinking straw, and
Figure 5B illustrates an inclined view from the top on a foil bag with inserted drinking straw.

### Detailed description of the figures

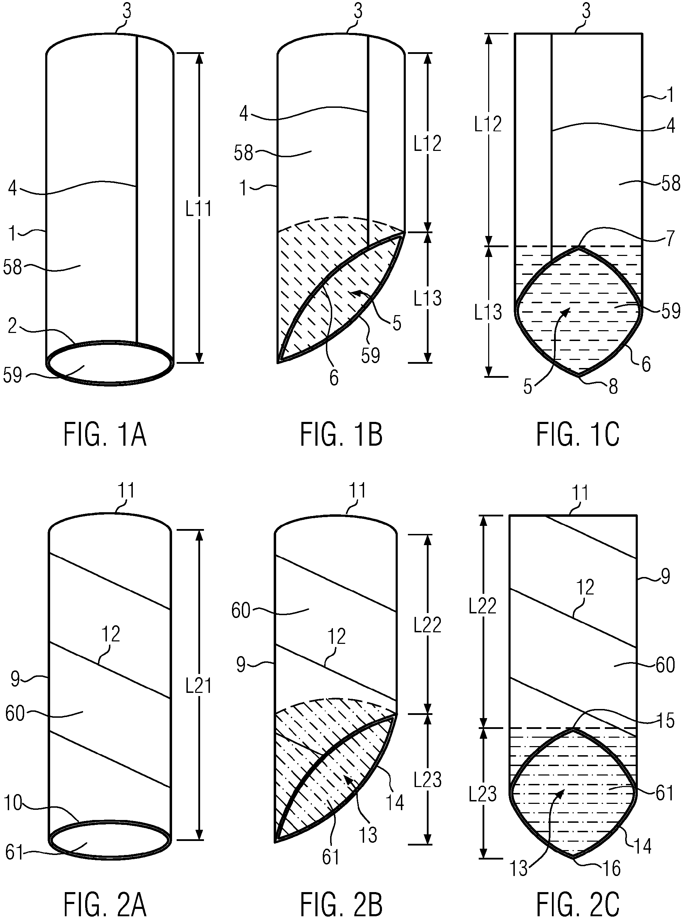

Figure 1A illustrates an inclined view from below of a paper tube 1 with a total length L11 that might have been cut from an endless paper tube, wherein the endless paper tube has been produced by horizontal winding of at least one paper layer. The paper tube 1 comprises a first end 2 and a second end 3. Moreover, a connection edge 4 is depicted, where edges of the at least one paper layer firmly adjoin and that extends in a longitudinal direction. The paper tube 1, and thus the paper drinking straw produced from it, comprises an inner surface 59 pointing to the interior of the paper tube 1, and an outer surface 58 pointing to the exterior of the paper tube 1.

By applying a physical oblique cut that starts at a starting point in a distance L13 from the first end 2 of the paper tube 1, a bevelled tip 5 with a cutting edge 6 is provided (see Fig. 1B). The paper tube of Fig. 1B may also be obtained by applying an oblique cut to a paper tube of the length L12 plus L11, which cuts the tube into two equal parts, one of which is shown in Fig. 1B. The remaining length L12 of the paper tube 1 above the oblique cut amounts to the difference of the distance L13 from the total length L11 of the paper tube 1. The part of the paper tube 1 that represents the bevelled tip 5 is indicated by the dashed region. The dashed region comprises the part of the paper tube 1 that extends between a plane, the plane being perpendicular to a longitudinal axis of the paper tube 1 and going through the starting point of the oblique cut, and the first end 2 of the paper tube 1.

Figure 1C illustrates a side view on the paper tube 1 of Figure 1B. An upper end 7 of the bevelled tip 5 and a lower end 8 of the bevelled tip 5 are illustrated. The upper end 7 may correspond to the starting point of the physical oblique cut. The lower end 8 may be used for penetrating a penetration opening of a beverage container.

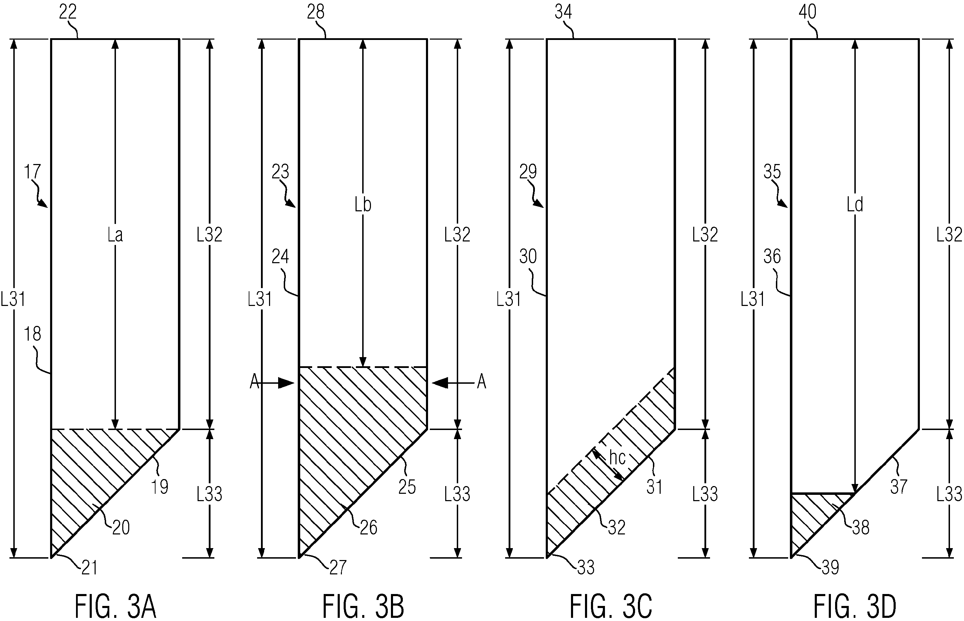

After providing the bevelled tip 5, the bevelled tip 5, a part of the bevelled tip 5, a part of the bevelled tip 5 and another part of the paper tube 1, or the bevelled tip 5 and another part of the paper tube 1 may be impregnated with an impregnation agent; see Figures 3A, 3B, 3C, 3D. It is also possible to only impregnate the cutting edge 6 of the bevelled tip 5, e.g., partially or completely. Thus, the at least one paper layer, or at least some part of the at least one paper layer for producing the paper tube 1 does not have to be impregnated and/or has to comprise impregnation agent before the paper tube 1 is produced and before the bevelled tip 5 is provided.

Figure 2A illustrates an inclined view from below of a paper tube 9 with a total length L21 that might have been cut from an endless paper tube, wherein the endless paper tube has been produced by helically winding of at least one paper layer. The paper tube 9 comprises a first end 10 and a second end 11. Moreover, a connection edge 12 where edges of the at least one paper layer firmly adjoin and that extends helically is depicted. The paper tube 9, and thus the paper drinking straw produced from it, comprises an inner surface 61 pointing to the interior of the paper tube 9, and an outer surface 60 pointing to the exterior of the paper tube 9.

By applying a physical oblique cut that starts at a starting point in a distance L23 from the first end 10 of the paper tube 9, a bevelled tip 13 with a cutting edge 14 is provided. The remaining length L22 of the paper tube 9 above the oblique cut amounts to the difference of the distance L23 from the total length L21 of the paper tube 9. The part of the paper tube 9 that represents the bevelled tip 13 is indicated by the dashed-pointed region. The dashed-pointed region comprises the part of the paper tube 9 that extends between a plane, the plane being perpendicular to a longitudinal axis of the paper tube 9 and going through the starting point of the oblique cut, and the first end 10 of the paper tube 9. The paper tube 11 as shown in Fig. 2B may also be obtained by applying an oblique cut to a paper tube of the length L22 plus L21 producing two equal parts one of which is shown in Fig. 2B.

Figure 2C illustrates a side view on the paper tube 9 of Figure 2B. An upper end 15 of the bevelled tip 13 and a lower end 16 of the bevelled tip 13 are illustrated. The upper end 15 may correspond to the starting point of the physical oblique cut. The lower end 16 may be used for penetrating a penetration opening of a beverage container.

After providing the bevelled tip 13, the bevelled tip 13, a part of the bevelled tip 13, a part of the bevelled tip 13 and another part of the paper tube 9, or the bevelled tip 13 and another part of the paper tube 9 may be impregnated with an impregnation agent; see Figures 3A, 3B, 3C, 3D. It is also possible to only impregnate the cutting edge 14 of the bevelled tip 9. Thus, the at least one paper layer, or at least some part of the at least one paper layer for producing the paper tube 9 does not have to be impregnated and/or has to comprise impregnation agent before the paper tube 9 is produced and before the bevelled tip 13 is provided.

Figure 3A illustrates a first embodiment of a paper drinking straw 17 that comprises a paper tube 18 with a bevelled tip 19 at a first end 21 of the paper tube 18; the paper tube 18 may be one of Figure 1B/1C or of Figure 2B/2C or another suitable paper tube. The paper tube 18 and thus the paper drinking straw 17 comprise a total length L31. The physical oblique cut for providing the bevelled tip 19 started at a distance L33 from the first end 21 of the paper tube 18. The length L32 of the paper tube 18 and thus of the paper drinking straw 17 above the oblique cut is the difference of the distance L33 from the total length L31 of the paper tube 18 and the paper drinking straw 17, respectively.

A region 20 in that the bevelled tip 19 has been impregnated with the impregnation agent is indicated by hatching. In the illustrated case, the impregnated region corresponds to the bevelled tip 19 and starts at a distance La from the second end 22 of the paper tube 18 and the paper drinking straw 17, respectively. The value of the distance La corresponds to the value of the length L32 above the oblique cut.

Figure 3B illustrates a second embodiment of a paper drinking straw 23 comprising a paper tube 24 with a bevelled tip 25 at the first end 27 of the paper tube 24 that also may be one of Figure 1B/1C or of Figure 2B/2C or another suitable paper tube. The total length L31, the length L32 and the distance L33 correspond to those of the first embodiment as depicted in Figure 3A.

Moreover, a region 26 in that the bevelled tip 25 has been impregnated with the impregnation agent is indicated by hatching. This region 26 starts at a distance Lb from the second end 28 of the paper tube 24. The value of the distance Lb is smaller than the value of the length L32 of the paper tube 24 and thus of the paper drinking straw 23 above the oblique cut. The impregnated region 26 thus comprises the bevelled tip 25 and another part of the paper tube 24.

Figure 3C illustrates a third embodiment of a paper drinking straw 29 comprising a paper tube 30 with a bevelled tip 31 at a first end 33 of the paper tube 30 that also may be one of Figure 1B/1C or of Figure 2B/2C or another suitable paper tube. The total length L31, the length L32 and the distance L33 correspond to those of the first embodiment as depicted in Figure 3A, and the second embodiment as depicted in Figure 3B, respectively.

Moreover, a region 32 in that part of the bevelled tip 31 has been impregnated with impregnation agent is indicated by hatching. This region 32 extends in a distance hc parallel to the cutting edge of the bevelled tip 31. The region 32 may also be not parallel to the cutting edge but inclined to it.

Figure 3D illustrates a fourth embodiment of a paper drinking straw 35 comprising a paper tube 36 with a bevelled tip 37 at the first end 39 of the paper tube 36 that also may be one of Figure 1B/1C or of Figure 2B/2C or another suitable paper tube. The total length L31, the length L32 and the distance L33 correspond to those of the first, second and third embodiments.

Moreover, a region 38 in that part of the bevelled tip 37 has been impregnated with the impregnation agent is indicated by hatching. This region 38 starts at a distance Ld from the second end 40 of the paper tube 36. The value of the distance Ld is bigger than the value of the length L32 of the paper tube 36 and thus of the paper drinking straw 35 above the oblique cut. The impregnated region 38 thus only comprises a part of the bevelled tip 37. In general, also only a part of the cutting edge may be impregnated.

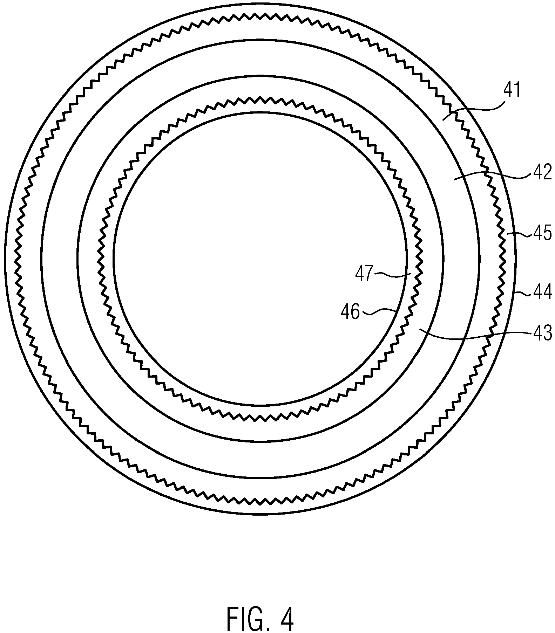

Figure 4 illustrates a cross section of a paper drinking straw comprising three paper layers, e.g., a cross section along A-A as shown in Figure 3B. A first paper layer 41 represents the outer layer, a second paper layer 42 the core paper layer, and a third paper layer 43 the inner layer. The outer surface 44 of the first paper layer 41 has been impregnated with impregnation agent and the impregnation agent also has penetrated partly into pores and spaces between fibres of the paper; this penetration region has been indicated with the reference sign 45.

The inner surface 46 of the third paper layer 43 also has been impregnated with impregnation agent and the impregnation agent has penetrated partly into pores and spaces between fibres of the paper; this penetration region has been indicated with the reference sign 47.

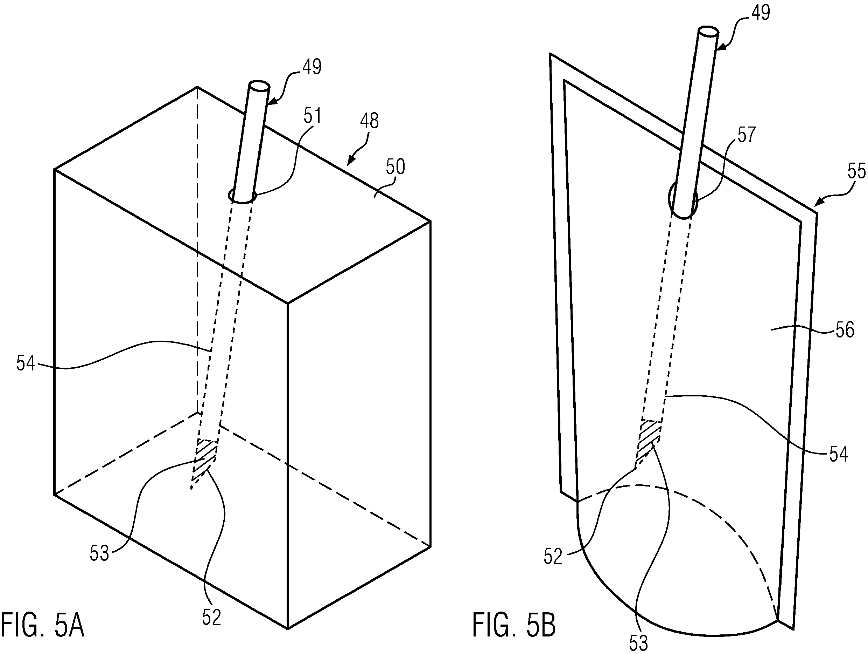

Figure 5A illustrates an inclined view from above on a beverage container 48 with an inserted paper drinking straw 49. On the top side 50 of the beverage container 48 a penetration opening 51 is provided that is closed with a foil or the like before the bevelled tip 52 of the paper drinking straw 49 penetrates the penetration opening 51. A region 53 of the bevelled tip 52 and part of the paper tube 54 is impregnated with an impregnation agent.

Figure 5B illustrates an inclined view from above of a foil bag 55 with an inserted paper drinking straw 49. On one bag side 56 of the foil bag 55 a penetration opening 57 is provided that is closed with a foil or the like before the bevelled tip 52 of the paper drinking straw 49 penetrates the penetration opening 57. The paper drinking straw 49 corresponds to the one of Figure 5A.

## Claims

1. Paper drinking straw (17, 23, 29, 35, 49) for a beverage container (48, 55) with a penetration opening (51, 57) for inserting the paper drinking straw (17, 23, 29, 35, 49), wherein the paper drinking straw (17, 23, 29, 35, 49) comprises a paper tube (1, 9, 18, 24, 30, 36) with a bevelled tip (19, 25, 31, 37, 52) at a first end (2, 10, 21, 27, 33, 39),
**characterised in that**
the bevelled tip (19, 25, 31, 37, 52) is at least partially impregnated with an impregnation agent.

2. The paper drinking straw of claim 1, wherein at least an inner surface (59, 61) and/or an outer surface (58, 60) and/or a cutting edge (6, 14) of the bevelled tip (19, 25, 31, 37, 52) are impregnated with the impregnation agent.

3. The paper drinking straw of claim 1 or 2, wherein the impregnation agent penetrates into pores and spaces between fibres of the paper.

4. The paper straw of one of claims 1 to 3, wherein regions aside of the bevelled tip (19, 25, 31, 37, 52) are not impregnated with the impregnation agent.

5. The paper drinking straw of one of claims 1 to 4, wherein starting from a second end (3, 11, 22, 28, 34, 40) of the paper tube (1, 9, 18, 24, 30, 36) 70%, 80%, 90%, or 100% of a total length (L11, L21, L31) of the paper tube (1, 9, 18, 24, 30, 36) are not impregnated with the impregnation agent.

6. The paper drinking straw of one of claims 1 to 5, wherein the impregnation agent comprises one or more of silicate, polymer, resin, wax, adhesive, or latex.

7. The paper drinking straw of one of claims 1 to 6, wherein the impregnation agent comprises sodium silicate.

8. The paper drinking straw of claim 7, wherein the sodium silicate comprises SiO₂3.3/3.5Na₂O, e.g., with 27.5% to 28.5% SiO₂ and 8.1% to 8.5% Na₂O.

9. The paper drinking straw of one of claims 1 to 8, wherein the bevelled tip (19, 25, 31, 37, 52) is at least partially impregnated with an impregnation agent only after providing the bevelled tip.

10. The paper drinking straw of one of claims 1 to 9, wherein the paper tube (1, 9, 18, 24, 30, 36) comprises a winded paper layer and wherein the impregnation agent is only applied to exposed surface of the paper tube (1, 9, 18, 24, 30, 36).

11. The paper straw of one of claims 1 to 10, wherein the paper tube (1, 9, 18, 24, 30, 36) comprises a paper layer of several layers of paper.

12. A beverage container (48, 55) for receiving liquid product, wherein the beverage container (48, 55) comprises a penetration opening (51, 57) for introducing a paper drinking straw (17, 23, 29, 35, 49) of one of the claims 1 to 11, and the paper drinking straw (17, 23, 29, 35, 49).

13. The beverage container of claim 12, wherein the beverage container (48, 55) is designed as a beverage carton (48), as a foil bag (55) or as a stand-up pouch.
